# EUROPEAN PATENT SPECIFICATION

(11) **EP 3 359 280 B1**
(45) Date of publication and mention of the grant of the patent: **24.07.2019**
(21) Application number: 16794044.4
(22) Date of filing: 28.09.2016
(51) Int. Cl.: B01D 53/14, B01D 53/34, B01D 53/77

(54) **HYBRID PROCESS FOR THE SELECTIVE ABSORPTION OF GASES FROM A GAS MIXTURE**
HYBRIDVERFAHREN ZUR SELEKTIVEN ABSORPTION VON GASEN AUS EINEM GASGEMISCH
PROCESSUS HYBRIDE POUR L'ABSORPTION SÉLECTIVE DE GAZ À PARTIR D'UN MÉLANGE DE GAZ

(30) Priority: 06.10.2015 IT UB20154126
(43) Date of publication of application: 15.08.2018
(73) Proprietor: Giammarco-Vetrocoke S.r.l., 30135 Venezia (IT)
(72) Inventor: TOMASI, Luigi, 31100 Treviso (IT)
(74) Representative: Piovesana, Paolo
(86) International application number: PCT/IB2016/055792
(87) International publication number: WO 2017/060796

(56) References cited:
- WO-A1-2011/035896
- DE-A1- 3 445 063
- JP-A- 2014 213 275
- US-A- 3 896 212
- US-A- 4 035 166
- US-A1- 2014 322 118
- US-B1- 6 183 540

## Description

The present invention relates to an improved process for the selective removal of gases from gas mixtures containing them through the use of washing solutions operating with a chemical-physical absorption and regeneration cycle.

The present invention relates to an improvement of known processes, used for the selective removal of gases from gas mixtures containing them. These processes consist of an initial absorption step in a dedicated column, in which the gases to be removed chemically react with an absorption solution, and of a final regeneration step in one or more dedicated columns, in which the gases absorbed and chemically bonded to the absorption solution are released by means of an external supply of heat and/or steam provided either directly or indirectly for the purpose of recycling the regenerated solution to the absorption step.

Particularly important in industrial applications are the processes for the selective removal of CO₂, H₂S, SO₂ and similar impurities from gas mixtures containing them by using aqueous solutions of alkali metal carbonates either simple or activated with the addition of glycine or other amino acids, primary, secondary, tertiary ethanolamines or mixtures thereof, complex ethanolamines including the family of sterically hindered amines, inorganic promoters such as arsenic oxides, borates, and others.

Examples of these processes are Catacarb, Benfield, Carsol and Giammarco-Vetrocoke and the variations and/or improvements thereof are known and some of these are described in patents:
Eichmeyer (Catacarb) US 3,851,041; US 3,896,212; US 3,932,582; US 4,271,132.
Benson (Benfield) US 3,563,695; US 3,642,430; US 3,685,960.
Van Hecke (Carsol) US 4,035,166 describes a gas removal process carried out exclusively with chemical absorption solutions in the first of which about 95% of CO2 is removed, and in the second of which the remaining 5% is removed.
   The use of two different chemical absorption solutions has the only purpose of improving the purity of the gas treated by reducing the CO2 content thereof while maintaining the supply of regeneration heat totally unchanged.
Giammarco et al US 3,659,401; US 3,714,327; US 3,962,404; US 4,073,863.

It is well known to the man skilled in the art that processes exist and are industrially applied for the above-mentioned industrial applications for the selective removal of gases from gas mixtures containing them, by means of a physical absorption that is based on the solubility of the same gases to be removed in water or in aqueous solutions of organic and/or inorganic compounds of varying nature and composition or in inorganic solvents such as methanol or organic solvents such as mixtures of polyethylene glycol with dimethyl ethers (DMPEG), propylene carbonate (PC), activated methyl-diethanolamines (a-MDEA) and others.

The solubility of the gases is governed by Henry's law and is favored by a low absorption temperature and a high partial pressure of the gases to be removed from the gas mixtures containing them.

A common feature of physical absorption processes is that the regeneration of the solution to release the absorbed gases takes place primarily by flash following the reduction of the pressure of the solution and/or absorbent liquid in one or more dedicated columns and can be improved and/or completed by stripping with steam, air or inert gas such as nitrogen.

Examples of these processes are washing with pressurized water, Selexol (DMPEG), Rectisol (Methanol), BASF (a-MDEA), Fluor Solvent (PC) and others.

As regards the chemical absorption processes of gases from gas mixtures containing them, the problem encountered is the need for an external heat source for the regeneration of the absorbent solution since the desorption reaction for the release of absorbed gases is strongly endothermic in order to recycle the solution to the absorption step.

In order to reduce the dependence of the regeneration of the absorption solution from the external heat and/or steam supply, low-energy regeneration schemes have been developed and applied industrially which use two or more of regeneration columns operating at different pressures, or schemes with internal production of steam by multiflash of the absorbent solution with recompression of the steam produced by means of ejectors.

The object of the invention is to eliminate all these drawbacks and to carry out the selective removal of gases from gas mixtures containing them with a process that exploits in an optimal manner the advantages derived from the different field of application of the aforementioned processes, thereby substantially reducing the need for external heat supply for the regeneration of the solutions used for absorbing the gases from gas mixtures containing them.

The present invention is a hybrid process for the selective absorption of gases from gas mixtures according to claim 1.

The present invention is further clarified hereinafter in a preferred embodiment and in a variant embodiment described by way of non-limiting example only with reference to the accompanying drawings, in which:

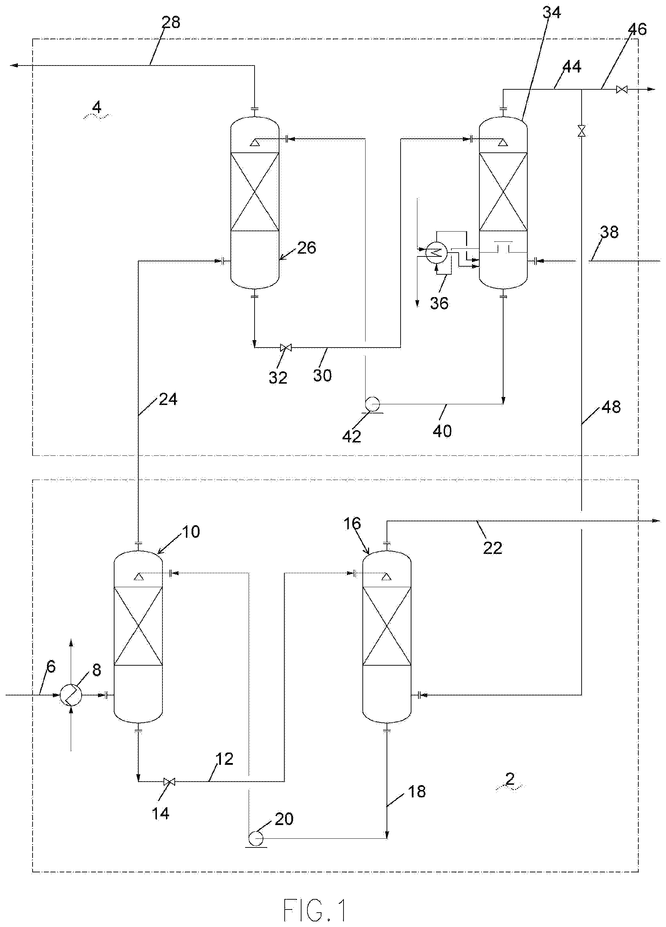

Figure 1 shows a schematic view of a plant for carrying out the process according to the invention, and
Figure 2 shows it in an alternative embodiment thereof.

As can be seen from the figures, the process according to the invention is implemented by means of a plant generally indicated with reference numeral 2 and consisting of a section 2 for a physical absorption-regeneration process and a section 4 for a chemical absorption-regeneration process.

In particular, section 2 comprises a conduit 6 which after passing through a heat exchanger 8 enters a physical absorption column 10 inferiorly provided with a conduit 12, in which a lamination valve 14 is mounted the outlet of which is connected to a head of a regeneration column 16.

Column 16 is inferiorly provided with a conduit 18 with a pump 20 the outlet of which is connected to the upper part of the absorption column 10.

Column 16 is provided with a conduit 22 for discharging the gases absorbed.

Section 4 substantially comprises a chemical absorption column 26 which is inferiorly connected to a conduit 24 coming out of the absorption column 10 head.

Column 26 is inferiorly provided with a conduit 30, in which a lamination valve 32 is mounted the outlet of which is connected to the head of a regeneration column 34.

The regeneration column 34 is inferiorly provided with a conduit 40 with a pump 42 the outlet of which is connected to the upper part of the chemical absorption column 26.

Column 26 is further provided with a conduit 28 for discharging the gas mixture deprived of the gases to be removed. The regeneration column 34 is connected to two conduits 36, 38 respectively, for supplying steam.

Column 34 is superiorly provided with a discharge conduit 44 which branches into two conduits 46 and 48, the latter being connected to column 16.

The plant operation is as follows: the gas mixture containing the gases to be selectively removed, after appropriate cooling in exchanger 8, feeds the physical absorption column 10 where it is contacted in countercurrent by a physical absorption solution fed to the head of the column by conduit 18 and in which the removal of up to 30% of gases to be removed takes place. In particular, the physical absorption solution may consist of water or aqueous solutions of organic and/or inorganic compounds of varying nature and composition or inorganic solvents such as methanol or organic solvents such as mixtures of polyethylene glycol with dimethyl ethers (DMPEG), propylene carbonate (PC), activated methyl-diethanolamines (a-MDEA) and others.

The gas mixture coming out of column 10 through conduit 24 feeds the chemical absorption column 26 where it is contacted in countercurrent by a chemical absorption solution fed through conduit 40 and in which the total removal of gases to be removed takes place. In particular, the chemical absorption solution may consist of aqueous solutions of alkali metal carbonates either simple or activated with the addition of glycine or other amino acids, primary, secondary, tertiary ethanolamines or mixtures thereof, complex ethanolamines including the family of sterically hindered amines, inorganic promoters such as arsenic oxides, borates, and others.

The gas mixture deprived of the gases to be removed comes out of column 26 through conduit 28.

The solution that has physically absorbed the gas to be removed from the gas mixture in column 10 comes out from the bottom and after reduction of pressure in valve 14 of conduit 12, feeds column 16 from the top.

In column 16, the gases physically absorbed by the solution are largely released by flash and come out of the column head through opening 22.

The solution regenerated after the expulsion of the absorbed gases is extracted from the bottom of column 16 and sent through conduit 18 and pump 20 to the head of the absorption column 10.

The solution that has chemically absorbed the gases to be removed from the gas mixture in column 26, after reduction of the pressure in valve 32, feeds the regeneration column 34.

In this column, the gases chemically absorbed from the solution are released by stripping with steam generated by heat provided by the heat exchanger 36 or with steam directly fed through conduit 38 and come out of the head of column 34 along conduit 44.

The desorbed gas and steam mixture coming out of the head of column 34 is partially or totally fed to the bottom of column 16 through conduit 48 to complete and/or improve the flash removal of the gases physically absorbed in column 10.

The solution regenerated after the expulsion of the absorbed gases is extracted from the bottom of column 34 to feed to circulation pump 42 and enter into the absorption column 10 again.

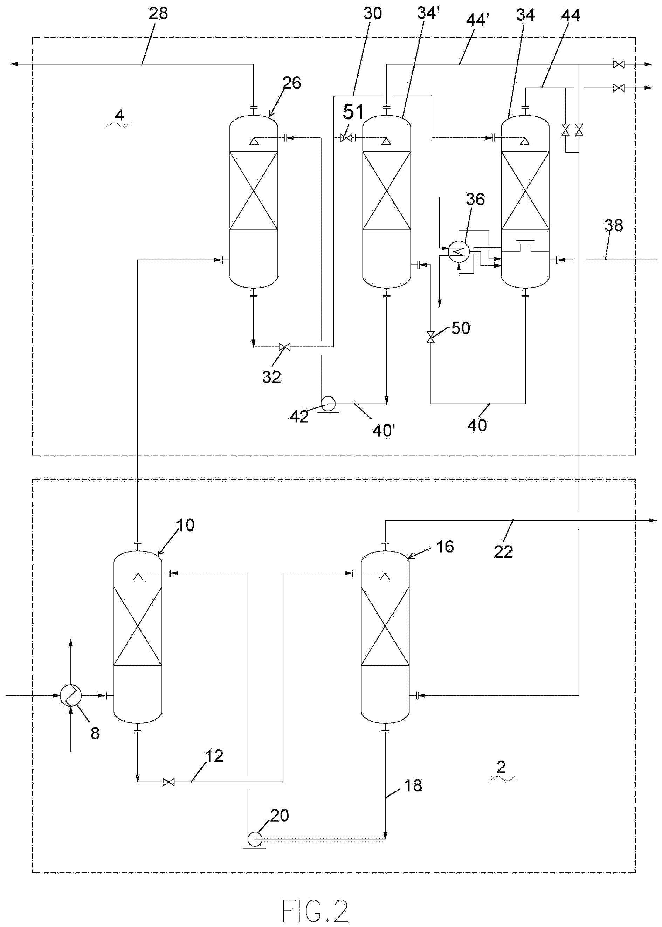

The embodiment shown in fig. 2 provides for two regeneration columns in series, 34 and 34' respectively, with column 34 operating at higher pressure than column 34'.

The plant operation in this embodiment provides that the regenerated solution is caused to flow through conduit 40 where pressure is reduced through valve 50, developing flash steam in column 34', steam which is used to regenerate the fraction of the solution coming out of column 26 regulated by valve 51.

The external regeneration heat provided through exchanger 36 and/or with steam directly fed through conduit 38 will be reduced in proportion to the fraction of solution fed to the head of column 34' which is regenerated solely with steam released by the flash of the solution fed to the bottom of column 34'.

The desorbed gas mixtures and the steam coming out of conduit 44 at the head of column 34 and of conduit 44' at the head of column 34' are partially or totally fed to the bottom of the regeneration column 16 to complete and/or improve the flash removal of the gases physically absorbed in column 10.

The totality of the regenerated solution is extracted from the bottom of column 34' and through conduit 40' and pump 42 it is recycled at the head of the absorption column 26.

From the above description it is clear that the inventor has meant to favorably exploit the physical absorption processes only when the partial pressures of the gases to be removed are higher and therefore at an early stage of the absorption process in which the solubility of the gases to be removed, which is governed by Henry's law, is applied in its most favorable field of use.

The absorption of the gases to be removed is then completed with a chemical absorption process which is more efficient in the presence of low partial pressures of the gases to be removed and, therefore, allows to achieve a very low residual content of the gases to be removed from the gas mixtures containing them.

From the above, it appears that the process according to the invention has several advantages and in particular:
- a drastic reduction of the need for external heat supply for the regeneration of the gas absorption solutions to be removed, since the heat to be fed for regenerating the chemical absorption solution is reduced in proportion to the reduced fraction of gas to be absorbed by the chemical process,
- the possibility of reusing in double effect the mixture of steam and desorbed gases exiting from the regeneration step of the chemical process to complete and/or improve the flash regeneration of the gases absorbed with the physical process, thereby reducing or eliminating the need for an integration of heat and/or external steam and/or inert gases normally used for this purpose.

### Example 1

From 280,000 Nm3/h of a process gas at a pressure of 30 bar consisting of a gas mixture mainly consisting of 61.0% H2, 21.0% N2 and 18.0% CO₂, 50.000 Nm3/h CO₂ are to be selectively removed in order to obtain a gas mixture substantially free of CO₂ and having a composition suitable for the production of NH3.

In order to achieve the above purpose, the process gas suitably cooled in a heat exchanger is first fed into a physical absorption column in which CO₂ contained in the gas mixture is partially absorbed from 18.0% to 12.5% by using a physical absorption solution dedicated to the purpose, which takes advantage of the high partial pressure of CO₂ in the gas mixture in the process gas which goes from 5.4 to 3.8 bar between the inlet and the outlet of the absorption column. Thus, in the application scope where Henry's law is more favorable. 16,500 Nm3/h CO₂, which represent 33% of CO₂ to be removed contained in the process gas, are preliminarily absorbed by the physical process.

At the outlet of the physical absorption column, the process gas is fed into a chemical absorption column in which the removal of CO₂ is completed, which is absorbed from 12.5% to 0.1% by using a chemical absorption solution dedicated to this purpose. 33,500 Nm3/h CO₂, which represent 67% of CO₂ to be removed contained in the process gas, are absorbed by the chemical process to complete the removal of CO₂ from the process gas.

The process gas comes out of the absorption column substantially free of CO₂ and with a composition suitable for the production of NH3.

The physical absorption solution coming out of the physical absorption column is fed to a first regeneration column where, by pressure reduction, the 16,500 Nm3/h CO₂ absorbed by the physical solution are released primarily by flash and recovered at high purity from the head of said regeneration column.

The regenerated physical solution, after the removal of the CO₂ absorbed, is recycled with a pump to the head of the physical absorption column, thereby closing the physical absorption-regeneration cycle.

The chemical absorption solution coming out of the chemical absorption column is fed to a second regeneration column where the 33,000 Nm3/h CO₂ absorbed by the chemical solution are released by stripping with heat-generated steam, provided indirectly through a reboiler and/or with steam fed directly, and recovered at high purity from the head of said second regeneration column 5.

The regenerated chemical solution, after the removal of the CO₂ absorbed, is recycled with a pump to the head of the chemical absorption column, thereby closing the chemical absorption-regeneration cycle.

The external heat for the regeneration of the chemical absorption solution provided indirectly and/or directly is substantially reduced by 33% compared to using the chemical absorption process alone as it is provided in the amount required for the removal of only 67% of CO₂ to be removed from the gas mixture.

Furthermore, the mixture of CO₂ and steam coming out of the head of the second regeneration column is advantageously used in double effect to complete and/or improve the flash regeneration by feeding the bottom of the first regeneration column, thus eliminating the need for an integration of heat and/or external steam and/or inert gases normally used in the first regeneration column for this purpose.

## Claims

1. A hybrid process for the selective absorption of gases from gas mixtures containing them, **characterized by** comprising the steps of:
- an initial absorption of the gases to be removed by a physical absorption process by which up to 30% of the gases to be removed is absorbed by physical solubility in an absorbent solution which is subsequently flash-regenerated, and
- a final absorption of the remaining gases with a chemical absorption process by which the remaining gases to be removed are chemically absorbed by an absorbent solution which is subsequently regenerated by means of a heat and/or steam external supply
the heat supplied for the regeneration of the chemical absorption solution and largely contained in the gas mixture exiting from the regeneration step being recovered and re-used in double effect for improving and/or for completing the flash-regeneration of the solution used for the physical absorption of the gases to be removed.

2. A process according to claim 1, **characterized in that** the heat contained in the gas mixture exiting from the regeneration step of the chemical absorption solution is used in the physical absorption step for the improvement and/or completion of the flash-regeneration by direct contact with the physical absorption solution.

3. A process according to claim 1, **characterized in that** the heat contained in the gas mixture exiting from the regeneration step of the chemical absorption solution is used in the physical absorption step for the improvement and/or completion of the flash-regeneration by heat exchanger with the physical absorption solution.

4. A process according to claim 1, **characterized in that** the final chemical absorption process of the gases to be removed from the gas mixtures containing them uses a low-energy regeneration scheme with at least two regeneration columns of the solution that operate at different pressure and in which the heat contained in the gas mixture coming out of the regeneration column at a lower pressure is used in the physical absorption step for the improvement and/or for completion of the flash regeneration.

5. A process according to claim 1, **characterized in that** the final chemical absorption process of the gases to be removed from the gas mixtures containing them uses a low-energy regeneration scheme with at least two regeneration columns of the solution operating at different pressure and in which the heat contained in the gas mixture coming out of the regeneration column at a higher pressure is used in the physical absorption process for the improvement and/or for completion of the flash regeneration.

6. A process according to claim 1, **characterized in that** the final chemical absorption process of the gases to be removed from the gas mixtures containing them uses a low-energy regeneration scheme with internal production of steam by multistage flash of the absorbent solution and recompression of the steam produced by means of ejectors and in which the heat contained in the gas mixture coming out of the regeneration column is used in the physical absorption process for the improvement and/or for completion of the flash regeneration.

## Patentansprüche

1. Hybridverfahren zur selektiven Absorption von Gasen aus Gasgemischen, die diese enthalten, **dadurch gekennzeichnet, dass** es die folgenden Schritte umfasst:
- eine Anfangsabsorption der Gase, die durch ein physikalisches Absorptionsverfahren entfernt werden sollen, durch das bis zu 30 % der zu entfernenden Gase durch physikalische Löslichkeit in einer absorbierenden Lösung, die nachfolgend Flash-regeneriert wird, absorbiert werden, und
- eine Endabsorption der verbleibenden Gase mit einem chemischen Absorptionsverfahren, durch das die verbleibenden Gase, die entfernt werden sollen, durch eine absorbierende Lösung, die nachfolgend mittels einer externen Wärme- und/oder Dampfzufuhr regeneriert wird, chemisch absorbiert werden,
wobei die Wärme, die zur Regeneration der chemischen Absorptionslösung zugeführt wird und weitgehend in dem Gasgemisch, das aus dem Regenerationsschritt austritt, enthalten ist, in Doppelwirkung zum Verbessern und/oder zum Abschließen der Flash-Regeneration der Lösung, die für die physikalische Absorption der zu entfernenden Gase verwendet wird, wiedergewonnen und wiederverwendet wird.

2. Verfahren nach Anspruch 1, **dadurch gekennzeichnet, dass** die Wärme, die in dem Gasgemisch, das aus dem Regenerationsschritt der chemischen Absorptionslösung austritt, enthalten ist, in dem physikalischen Absorptionsschritt zur Verbesserung und/oder zum Abschluss der Flash-Regeneration durch direkten Kontakt mit der physikalischen Absorptionslösung verwendet wird.

3. Verfahren nach Anspruch 1, **dadurch gekennzeichnet, dass** die Wärme, die in dem Gasgemisch, das aus dem Regenerationsschritt der chemischen Absorptionslösung austritt, enthalten ist, in dem physikalischen Absorptionsschritt zur Verbesserung und/oder zum Abschluss der Flash-Regeneration durch Wärmeaustauscher mit der physikalischen Absorptionslösung verwendet wird.

4. Verfahren nach Anspruch 1, **dadurch gekennzeichnet, dass** das abschließende chemische Absorptionsverfahren für die Gase, die aus den Gasgemischen, die diese enthalten, zu entfernen sind, ein niederenergetisches Regenerationsschema mit mindestens zwei Regenerationssäulen der Lösung verwendet, die unter verschiedenen Drücken arbeiten, und wobei die Wärme, die in dem Gasgemisch, das unter einem niedrigeren Druck aus der Regenerationssäule kommt, enthalten ist, in dem physikalischen Absorptionsschritt zur Verbesserung und/oder zum Abschluss der Flash-Regeneration verwendet wird.

5. Verfahren nach Anspruch 1, **dadurch gekennzeichnet, dass** das abschließende chemische Absorptionsverfahren für die Gase, die aus den Gasgemischen, die diese enthalten, zu entfernen sind, ein niederenergetisches Regenerationsschema mit mindestens zwei Regenerationssäulen der Lösung verwendet, die unter verschiedenen Drücken arbeiten, und wobei die Wärme, die in dem Gasgemisch, das unter einem höheren Druck aus der Regenerationssäule kommt, enthalten ist, in dem physikalischen Absorptionsverfahren zur Verbesserung und/oder zum Abschluss der Flash-Regeneration verwendet wird.

6. Verfahren nach Anspruch 1, **dadurch gekennzeichnet, dass** das abschließende chemische Absorptionsverfahren für die Gase, die aus den Gasgemischen, die diese enthalten, zu entfernen sind, ein niederenergetisches Regenerationsschema mit interner Dampferzeugung durch mehrstufigen Flash der absorbierenden Lösung und Rekompression des mittels Ausstoßern erzeugten Dampfs verwendet, und wobei die Wärme, die in dem Gasgemisch, das aus der Regenerationssäule kommt, enthalten ist, in dem physikalischen Absorptionsverfahren zur Verbesserung und/oder zum Abschluss der Flash-Regeneration verwendet wird.

## Revendications

1. Procédé hybride d'absorption sélective de gaz contenus dans de mélanges de gaz, **caractérisé en ce qu'**il comprend les étapes consistant à:
- une absorption initiale des gaz à éliminer par un processus d'absorption physique par lequel jusqu'à 30% des gaz à éliminer sont absorbés par la solubilité physique dans une solution absorbante qui est ensuite régénérée instantanément, et
- une absorption finale des gaz restants avec un processus d'absorption chimique par lequel les gaz restants à éliminer sont chimiquement absorbés par une solution absorbante qui est ensuite régénérée au moyen d'un apport externe de chaleur et/ou de vapeur
la chaleur fournie pour la régénération de la solution d'absorption chimique et pour la plupart contenue dans le mélange gazeux sortant de l'étape de régénération est récupérée et réutilisée à double effet pour améliorer et/ou pour achever la régénération instantanée de la solution utilisée pour le traitement physique absorption des gaz à éliminer.

2. Procédé selon la revendication 1, **caractérisé en ce que** la chaleur contenue dans le mélange gazeux sortant de l'étape de régénération de la solution utilisée pour l'absorption chimique est utilisée dans l'étape d'absorption physique pour l'amélioration et/ou la réalisation de la régénération instantanée par contact avec la solution utilisée pour l'absorption physique.

3. Procédé selon la revendication 1, **caractérisé en ce que** la chaleur contenue dans le mélange gazeux sortant de l'étape de régénération de la solution utilisée pour l'absorption chimique est utilisée dans l'étape d'absorption physique pour l'amélioration et/ou la réalisation de la régénération instantanée par un échangeur de chaleur avec la solution utilisée pour l'absorption physique.

4. Procédé selon la revendication 1, **caractérisé en ce que** le procédé d'absorption chimique finale des gaz à éliminer des mélanges gazeux les contenant utilise un schéma de régénération à basse énergie avec au moins deux colonnes de régénération de la solution fonctionnant à une pression différente et dans lequel la chaleur contenue dans le mélange gazeux sortant de la colonne de régénération à une pression inférieure est utilisée dans l'étape d'absorption physique pour l'amélioration et/ou pour la réalisation de la régénération instantanée.

5. Procédé selon la revendication 1, **caractérisé en ce que** le procédé d'absorption chimique finale des gaz à éliminer des mélanges gazeux les contenant utilise un schéma de régénération à basse énergie avec au moins deux colonnes de régénération de la solution fonctionnant à une pression différente et dans lequel la chaleur contenue dans le mélange gazeux sortant de la colonne de régénération à une pression plus élevée est utilisée dans le processus d'absorption physique pour l'amélioration et/ou pour la réalisation de la régénération instantanée.

6. Procédé selon la revendication 1, **caractérisé en ce que** le procédé d'absorption chimique finale des gaz à éliminer des mélanges de gaz les contenant utilise un système de régénération à basse énergie avec production interne de vapeur par flash en plusieurs étapes de la solution absorbante et recompression de la vapeur produite au moyen d'éjecteurs et dans laquelle la chaleur contenue dans le mélange gazeux sortant de la colonne de régénération est utilisée dans le processus d'absorption physique pour l'amélioration et/ou la réalisation de la régénération instantanée.
